# FASCICULE DE BREVET EUROPEEN

(11) **EP 2 929 673 B1**
(45) Date de publication et mention de la délivrance du brevet: **05.02.2020**
(21) Numéro de dépôt: 13808143.5
(22) Date de dépôt: 03.12.2013
(51) Int. Cl.: H04L 12/18, H04L 12/58, G06F 3/0481, H04L 29/08, H04N 21/431, H04N 21/4788, H04N 5/445, H04M 3/42

(54) **PROCÉDÉ DE COMMUNICATION D'UN ÉTAT DE PRÉSENCE D'UN GROUPE D'UTILISATEURS DANS UN ESPACE VIRTUEL DE COMMUNICATION FOURNI PAR UN SERVEUR DE COMMUNICATION SUR UN RÉSEAU DE COMMUNICATION**
VERFAHREN ZUR MITTEILUNG EINES PRÄSENZZUSTANDS EINER BENUTZERGRUPPE IN EINEM VIRTUELLEN KOMMUNIKATIONSRAUM, DER VON EINEM KOMMUNIKATIONSSERVER DURCH EIN KOMMUNIKATIONSNETZ BEREITGESTELLT WIRD
METHOD OF COMMUNICATING A PRESENCE STATE OF A GROUP OF USERS IN A VIRTUAL COMMUNICATION SPACE WHICH IS PROVIDED BY A COMMUNICATION SERVER OVER A COMMUNICATION NETWORK

(30) Priorité: 04.12.2012 FR 1261629
(43) Date de publication de la demande: 14.10.2015
(73) Titulaire: Orange, 75015 Paris (FR)
(72) Inventeur: LE HUEROU, Emmanuel, F-22700 Saint Quay Perros (FR); TOUTAIN, François, F-22700 Louannec (FR); SALIN, Richard, F-22540 Pedernec (FR)
(74) Mandataire: Plasseraud IP
(86) Numéro de dépôt international: PCT/FR2013/052916
(87) Numéro de publication internationale: WO 2014/087087

(56) Documents cités:
- EP-A1- 2 237 533
- EP-A2- 0 898 424
- EP-A2- 0 989 700
- US-A1- 2002 075 304
- US-A1- 2003 210 265
- US-A1- 2012 150 970

## Description

L'invention concerne de manière générale le domaine des télécommunications et plus précisément la communication d'un état de présence d'un groupe d'utilisateurs dans un espace virtuel de communication fourni par un serveur de communication sur un réseau de communication, cet espace virtuel fournissant une pluralité de modes de communication distincts pouvant être partagés par tous les utilisateurs du groupe précité.

Avec l'évolution, ces dernières années, des terminaux de communication tels que les "téléphone intelligents" (*smartphones* en anglais), et des réseaux de communications, avec notamment l'apparition des réseaux dits sociaux basés sur l'Internet, les utilisateurs de terminaux fixes ou mobiles peuvent utiliser des applications installées sur leur terminal et/ou accessibles sur Internet, pour partager des activités telles que le partage de photos ou de vidéos, de jeux, ou l'échange de messages. On peut citer à titre d'exemple le service de réseau social *Facebook™* permettant en particulier le partage de photos/vidéos entre amis, l'application mobile *WhatsApp™* intégrant un système de messagerie instantanée, l'application mobile de jeu de dessin *Draw Something™.*

Les applications du type de celles mentionnées ci-dessus, mettent généralement en œuvre des interfaces utilisateurs permettant à un utilisateur connecté au service considéré de savoir si un autre utilisateur est connecté au service, par exemple en affichant une icône dont la couleur représente l'état connecté (couleur verte par exemple). De telles interfaces sont déjà connues des demandes de brevet US2012/150970 A1, US2002/075304 A1, US2003/210265 A1, EP2237533 A1 et EP0989700 A2.

Cependant, les interfaces utilisateurs précitées ne permettent généralement d'informer de la connexion d'un utilisateur qu'à une seule activité proposée par le service, et ne sont donc pas adaptées pour pouvoir informer efficacement un utilisateur de la présence simultanée de plusieurs utilisateurs à une activité, parmi un ensemble d'activités pouvant être partagées par un groupe ou communauté d'utilisateurs.

La présente invention, définie par les revendications indépendantes de procédé 1, de serveur 8, de système 10 et de programme 12, a notamment pour objectif d'améliorer la situation exposée ci-dessus. A cet effet, selon un premier aspect, l'invention a pour objet un procédé de communication d'un état de présence d'un groupe d'utilisateurs munis de terminaux d'utilisateurs, dans un espace virtuel de communication fourni par un serveur de communication sur un réseau de communication, l'espace virtuel fournissant une pluralité de modes de communication distincts, dits "activités", pouvant être partagés par tous les utilisateurs dudit groupe. Selon l'invention, le procédé précité comporte des opérations consistant à :
- associer à chaque activité de l'espace virtuel une icône graphique ayant une forme géométrique prédéfinie et représentant l'activité, et destinée à être affichée au travers d'une interface graphique mise en œuvre par une application cliente de partage d'activités installée dans chaque terminal d'utilisateur ;
- déterminer un état de présence de chaque utilisateur du groupe dans l'espace virtuel de communication ;
- déterminer pour chacune des activités une mise en forme graphique de l'icône associée sans modification de la forme géométrique de l'icône, cette mise en forme graphique étant déterminée en fonction de l'état de présence des utilisateurs relativement à cette activité, et permettant d'identifier visuellement le ou les différents utilisateurs participant à cette activité.

Grâce au procédé de communication de l'invention défini en termes généraux ci-dessus, et en particulier grâce à la caractéristique selon laquelle la mise en forme graphique d'une icône associée à une activité est déterminée en fonction de l'état de présence des utilisateurs relativement à cette activité, permet à un utilisateur quelconque du groupe d'utilisateurs, à la vue d'une telle icône graphique, d'identifier simultanément l'activité en cause et les utilisateurs qui participent à cette activité.

Selon un mode de réalisation particulier de l'invention, le procédé précité comporte en outre une opération consistant à affecter au préalable à chaque utilisateur du groupe une couleur spécifique représentant l'utilisateur, et dans ce cas, la mise en forme graphique d'une icône associée à une activité donnée est déterminée en fonction de ou des couleurs représentant respectivement le ou les utilisateurs présents pour cette activité.

Dans le mode de réalisation précité, selon une implémentation particulière, lorsqu'aucun utilisateur n'est présent pour une activité donnée, l'icône graphique associée à cette activité est affichée avec une couleur déterminée dite "neutre" (par exemple grisée). Lorsqu'un seul utilisateur est présent, l'icône graphique associée à l'activité est représentée graphiquement avec la couleur identifiant l'utilisateur présent pour cette activité. Enfin, lorsqu'au moins deux utilisateurs sont présents, l'icône graphique associée à l'activité est représentée graphiquement avec les différentes couleurs identifiant respectivement les utilisateurs présents.

Le fait de représenter une icône d'activité avec plusieurs couleurs identifiant respectivement les utilisateurs participant à cette activité, permet d'informer immédiatement et efficacement un utilisateur du service, regardant cette icône, de la présence des utilisateurs pour cette activité.

Selon des exemples de réalisation, une telle icône peut représenter une forme symbolisant l'activité, par exemple une note de musique pour une activité de partage de musique, un pinceau pour une activité de dessin, une bulle (de bande dessinée) pour une activité de messagerie, etc. Par exemple pour deux utilisateurs participant à une activité, la partie supérieure de l'icône correspondante pourra être représentée avec une première couleur correspondant à un utilisateur, tandis que sa partie inférieure sera représentée avec une seconde couleur correspondant à l'autre utilisateur.

Dans le cas d'un nombre d'utilisateurs supérieur à trois ou quatre partageant une activité donnée, on pourra choisir comme icône une forme géométrique associée à une information textuelle ou bien à un symbole positionné à l'intérieur de la forme géométrique. Par exemple, un rectangle entourant une note de musique pourra être partitionné en huit secteurs de surface identique, dans le cas de huit utilisateurs partageant une même activité de partage de musique. Chaque secteur sera alors affiché graphiquement avec une couleur différente, identifiant chacune un utilisateur parmi les huit.

Selon un mode de réalisation particulier de l'invention, l'opération de détermination d'un état de présence de chaque utilisateur du groupe dans l'espace virtuel de communication comprend :
- la détection d'une connexion d'un utilisateur au serveur de communication et de la sélection d'une activité par cet utilisateur ;
- la mise à jour d'une structure de données mettant en correspondance des identifiants d'activité avec des identifiants d'utilisateur, un identifiant d'utilisateur mis en correspondance avec un identifiant d'activité indiquant que l'utilisateur correspondant est actuellement présent dans l'activité correspondante.

Une telle structure de données pourra par exemple être constituée d'une table de base de données.

Selon un mode de réalisation, en réponse à une mise à jour de la structure de données précitée, un message de notification de présence est transmis aux terminaux d'utilisateurs afin de provoquer une mise à jour correspondante de l'interface graphique mise en œuvre par l'application cliente de chaque terminal.

Ainsi, dans ce mode de réalisation, la gestion de la présence des utilisateurs du groupe vis-à-vis des activités offertes par l'espace virtuel est effectuée côté serveur, tandis que la gestion de l'affichage des icônes en fonction de l'état présence des utilisateurs, est déportée côté terminaux.

En pratique la présente invention est intégrée dans un service de communication accessible par connexion à un serveur de communication fournissant un espace virtuel de partage, selon lequel chaque activité de l'espace virtuel porte sur au moins un contenu multimédia associé, dit contenu d'activité, partagé par les utilisateurs du groupe, et étant mise en œuvre par des actions déterminées dont l'exécution peut être déclenchée par tous les utilisateurs du groupe. Selon ce service de communication, les actions incluent au moins des actions de création, modification ou suppression d'un contenu d'activité donné, et les requêtes d'actions relatives à une activité considérée, en provenance des terminaux des utilisateurs du groupe, sont traitées de manière séquentielle selon l'ordre d'arrivée des requêtes.

Selon une mise en œuvre particulière de l'invention, une action en cours d'exécution par un utilisateur présent dans une activité donnée, provoque un effet graphique supplémentaire sur l'icône représentant l'activité concernée, cet effet graphique indiquant que cet utilisateur, présent pour l'activité, est actuellement actif.

Par exemple, l'effet graphique précité peut être un clignotement ou un scintillement d'une zone de l'icône dont la couleur correspond à l'utilisateur présent et actif, c'est-à-dire en cours d'exécution d'une action relative à l'activité symbolisée par l'icône; une absence d'un tel effet graphique supplémentaire indiquant par conséquent que l'utilisateur est connecté (présent) à l'activité mais est pour le moment inactif.

Selon un autre exemple, l'effet graphique supplémentaire peut consister en l'ajout, dans la zone de l'icône dont la couleur indique la présence de l'utilisateur, d'un élément graphique additionnel indiquant l'état d'activité (actif ou inactif) de l'utilisateur, tel qu'un ou plusieurs caractères.

La mise en œuvre de l'invention est particulièrement indiquée dans un tel service de communication, lequel permet avantageusement au groupe d'utilisateurs de pouvoir disposer d'un espace virtuel de communication multimodal, c'est-à-dire offrant des modes de communication variés, tels que la communication téléphonique, visiophonique, l'échanges de messages de type SMS, MMS, électronique (*email*), ou message instantané (également désigné par *chat* en anglais), mais également des modes de communication par partage synchrone ou asynchrone de contenus multimédias : photos, vidéos, dessins etc. De plus, selon cette implémentation de l'invention, tous les utilisateurs du groupe considéré disposent des mêmes droits d'accès et de modification relatifs aux contenus partagés, ce qui simplifie le paramétrage de l'application serveur, réalisant en quelque sorte une copropriété de l'espace virtuel et des contenus associés entre les différents utilisateurs du groupe. Le traitement des requêtes d'action envoyées par les utilisateurs au serveur, en fonction de l'ordre d'arrivée des requêtes permet de compenser l'absence de gestion de droits d'accès définis en fonction de l'utilisateur, et d'établir un espace virtuel de communication pour lequel tous les membres du groupe disposent des mêmes droits.

Selon un deuxième aspect, l'invention a pour objet un serveur de communication adapté pour la mise en œuvre d'un procédé de communication d'un état de présence d'un groupe d'utilisateurs munis de terminaux d'utilisateurs, dans un espace virtuel de communication fourni par un serveur de communication sur un réseau de communication, cet espace virtuel fournissant une pluralité de modes de communication distincts, dits "activités", pouvant être partagés par tous les utilisateurs du groupe, et chaque activité offerte par l'espace virtuel étant associé à une icône graphique qui représente l'activité et qui est destinée à être affichée au travers d'une interface graphique mise en œuvre par une application cliente de partage d'activités installée dans chaque terminal d'utilisateur. Conformément à l'invention un tel serveur de communication comporte :
- des moyens pour déterminer un état de présence de chaque utilisateur du groupe dans l'espace virtuel de communication ;
- des moyens d'envoi de messages de notification de présence à destination des terminaux d'utilisateurs, afin de provoquer dans chacun des terminaux destinataires une mise à jour correspondante de l'interface graphique mise en en œuvre par l'application cliente de chaque terminal, suite à un changement de l'état de présence du groupe d'utilisateurs dans l'espace virtuel.

Selon un mode de réalisation particulier, les moyens précités de détection d'un état de présence incluent :
- des moyens de détection d'une connexion d'un utilisateur à l'espace virtuel de communication et de la sélection d'une activité par un utilisateur ;
- des moyens de mise à jour d'une structure de données mettant en correspondance des identifiants d'activité avec des identifiants d'utilisateur, un identifiant d'utilisateur mis en correspondance avec un identifiant d'activité indiquant que l'utilisateur correspondant est actuellement présent dans l'activité correspondante.

Un changement d'état de présence du groupe d'utilisateurs dans l'espace virtuel se traduit ainsi par une mise à jour de la structure de données susmentionnée.

Corrélativement, selon un troisième aspect, l'invention concerne un système comprenant un serveur et un terminal de communication, ce dernier comportant :
- des moyens de connexion à un espace virtuel de communication fourni par un serveur de communication sur un réseau de communication, l'espace virtuel fournissant une pluralité de modes de communication distincts, dits "activités", pouvant être partagés par tous les utilisateurs d'un groupe d'utilisateurs déterminé;
- des moyens de traitement de messages de notification de présence, reçus en provenance du serveur de notification et porteurs d'informations de changement d'état de présence des utilisateurs dans l'espace virtuel ;
- des moyens d'interface graphique couplés avec les moyens de traitement de messages, chargés d'afficher pour chacune des activités une icône graphique ayant une forme géométrique prédéfinie et représentant l'activité considérée, et de déterminer pour chacune des activités une mise en forme graphique de l'icône associée sans modification de la forme géométrique de l'icône, cette mise en forme graphique étant déterminée en fonction de l'état de présence des utilisateurs relativement à cette activité, et permettant d'identifier visuellement le ou les utilisateurs participant à cette activité.

Selon une mode de réalisation particulier de l'invention, les moyens d'interface graphique équipant un tel terminal de communication, déterminent la mise en forme graphique d'une icône associée à une activité donnée en fonction de ou des couleurs représentant respectivement le ou les utilisateurs présents pour cette activité, une couleur spécifique ayant été au préalable affectée à chaque utilisateur afin de le représenter.

De manière générale, le procédé susmentionné de communication selon l'invention est mis en œuvre par l'exécution d'applications logicielles installées et exécutées respectivement dans un serveur de communication (application serveur) et dans des terminaux de communication (applications clientes) selon l'invention. Ces applications logicielles mettent en œuvre un ou plusieurs programmes d'ordinateur comprenant des instructions dont l'exécution par un processeur équipant un tel serveur ou un tel terminal, selon le cas, permet de mettre en œuvre les étapes d'un procédé de communication selon l'invention.

Par conséquent, selon un quatrième aspect, la présente invention concerne un programme d'ordinateur installé dans un serveur de communication selon l'invention, ou dans un terminal de communication selon l'invention, un tel programme comportant des instructions dont l'exécution par un processeur provoque la mise en œuvre d'un procédé de communication selon l'invention.

De plus, le programme d'ordinateur précité peut utiliser n'importe quel langage de programmation, et peut être sous la forme de code source, code objet, ou de code intermédiaire entre code source et code objet, par exemple sous une forme partiellement compilée.

En pratique, un tel programme d'ordinateur est enregistré sur un support d'informations lisible par un ordinateur, par conséquent la présente invention vise également un support d'informations lisible par un ordinateur, sur lequel sont enregistrées les instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme ou module logiciel, selon l'invention, peut notamment être téléchargé sur un réseau de type Internet.

Les avantages procurés par un serveur de communication, un terminal de communication et un programme d'ordinateur, tels que brièvement exposés plus haut, sont identiques ou contribuent à ceux déjà mentionnés en relation avec le procédé de communication selon l'invention, ces avantages ne seront par conséquent pas rappelés ici.

D'autres caractéristiques et avantages de la présente invention ressortiront de la description détaillée qui suit, laquelle fait référence aux dessins annexés dans lesquels :
- la figure 1 illustre un exemple de système de télécommunication dans lequel la présente invention est mise en œuvre, et en particulier illustre les éléments fonctionnels incorporés respectivement dans un terminal de communication et dans un serveur de communication, selon l'invention ;
- la figure 2 représente sous forme d'organigramme les principales étapes d'un procédé selon l'invention, de communication d'un état de présence d'un groupe d'utilisateurs, dans un espace virtuel de communication ; et
- les figures 3a-3c représentent respectivement un exemple de bandeau d'affichage d'icônes graphiques selon l'invention, destiné à être affiché dans un terminal de communication selon l'invention.

On décrit ci-après de manière détaillée un mode de réalisation de l'invention donné à titre d'exemple. Dans ce mode de réalisation, le procédé de communication d'un état de présence selon l'invention est appliqué à un espace virtuel de communication tel que décrit dans le document brevet : demande de brevet français n° 1261555 déposée le 3 décembre 2012 par la présent demanderesse. On pourra se reporter au document précité notamment pour obtenir plus de détails concernant la création d'un tel espace virtuel de communication et son mode d'utilisation.

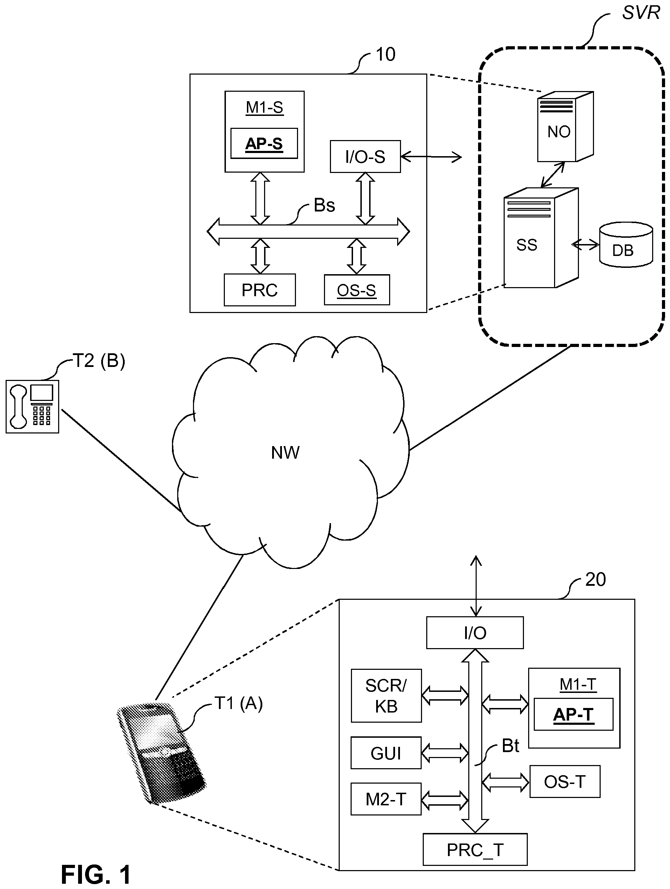

La **figure 1** illustre un exemple de système de télécommunications dans lequel l'invention est mise en œuvre. Dans cet exemple, on a représenté seulement deux terminaux de communication T1, T2 utilisés respectivement par des utilisateurs A et B, par exemple de type *smartphone*, aptes à se connecter à un réseau mobile dit de 3^{ème} génération - par exemple conforme à la norme UMTS (*Universal Mobile Telecommunications System*)-, ou à un réseau mobile dit de 4^{ème} génération - par exemple conforme à la norme LTE (*Long Term Evolution*). Les terminaux T1, T2 sont également aptes à se connecter à un réseau de communication NW constitué ici d'un réseau IP (*Internet Protocol*) de type Internet.

Le système comprend aussi un serveur de communication SVR connecté au réseau NW offrant un service d'hébergement et de gestion d'espaces virtuels de communication, conformément à l'invention. Le serveur SVR comprend de manière simplifiée une base de données DB chargée de stocker les données relatives aux espaces virtuels créés pour des groupes d'utilisateurs, une entité serveur de notifications NO chargée de transmettre des notifications aux membres d'un groupe pour les notifier des changements opérés sur l'espace de communication du groupe considéré. Le serveur SVR comprend une entité serveur d'espace virtuel SS chargée de mettre en œuvre les modes de communication (activités) définis pour chaque espace virtuel de communication, en liaison avec la base de données DB et l'entité serveur de notifications NO.

Sur la figure 1, dans un but de simplification, le serveur SVR est représenté comme étant composé d'entités (NO, SS, DB) localisées à proximité les unes des autres. Cependant, selon le mode de réalisation choisi, le serveur SVR peut être également composé d'entités distantes ou réparties sur le réseau. En particulier, les données ou contenus multimédias associés aux activités, et partagés au sein de l'espace virtuel, peuvent provenir d'un serveur distinct et distant offrant un service de stockage de contenus multimédias (photos par exemple).

On considère à présent un espace virtuel de communication associé à un groupe d'utilisateurs déterminé. Le groupe d'utilisateurs considéré peut être par exemple un groupe d'amis ou un groupe formé des membres d'une famille, ou encore des salariés d'une petite entreprise. L'espace virtuel de communication associé à ce groupe est un espace de communication dit "persistant", car cet espace de communication continue d'exister même si aucun membre du groupe n'est connecté à l'espace.

Au cours de la configuration de l'espace considéré, différents modes de communication, désignés par "activités", ont été choisis par un utilisateur du groupe, par exemple les activités suivantes : partage/consultation de photos, partage/consultation de vidéos, partage/consultation de cartes (routières, d'itinéraires, géographiques, ...), communication textuelle (email, messages SMS et MMS, messagerie instantanée), communication téléphonique, communication visiophonique.

Conformément à l'invention, le serveur SS d'espace virtuel comprend un module de gestion de la présence des utilisateurs du groupe aux activités offertes par l'espace virtuel associé à une table de correspondance associant des identifiants d'activités avec des identifiants d'utilisateurs.

Le module de gestion de présence du serveur SS d'espace virtuel, est chargé de déterminer un état de présence de chaque utilisateur du groupe dans l'espace virtuel de communication. A cet effet, le module de gestion de présence dispose d'une entité logicielle apte à détecter une connexion d'un utilisateur à l'espace virtuel de communication et à détecter la sélection d'une activité par un utilisateur connecté au serveur SVR. Le module de gestion de présence comprend par ailleurs une entité de mise à jour de la table de correspondance précitée, mettant en correspondance des identifiants d'activité avec des identifiants d'utilisateur. Dans cette la table, un identifiant d'utilisateur mis en correspondance avec un identifiant d'activité indique que l'utilisateur correspondant est actuellement présent dans l'activité correspondante.

L'entité serveur de notification NO susmentionnée, du serveur SVR, est chargée également, conformément à l'invention, de créer et transmette des messages de notification de présence à destination des terminaux d'utilisateurs (T1, T2), suite à une mise à jour de la table de correspondance susmentionnée, afin de provoquer, dans chacun des terminaux destinataires, une mise à jour correspondante de l'interface graphique mise en œuvre par l'application cliente de chaque terminal.

En pratique, le serveur de communication SVR est constitué d'éléments agencés selon une architecture matérielle d'ordinateur 10. Cette architecture comprend notamment un processeur (PRC) et des composants mémoire de type ROM et RAM, communiquant par l'intermédiaire d'un ou plusieurs bus de données (Bs). D'un point de vue fonctionnel le serveur SVR comprend les modules suivants :
- un module I/O-S d'interface de communication réseau, chargé de communiquer avec le réseau NW pour, notamment, recevoir en provenance des terminaux d'utilisateurs T1, T2 des requêtes (création, action) liées à un espace virtuel stocké dans la base de données DB, ou transmettre des notifications ou des mises à jours concernant un espace virtuel donné aux terminaux (T1, T2) des utilisateurs du groupe associé à cet espace ;
- un module système d'exploitation, OS-S, gérant l'interaction entre les différents modules et le processeur PRC du serveur ;
- un module mémoire M1-S dans lequel sont enregistrées des instructions de programme de l'application serveur AP-S selon l'invention, dont l'exécution par le processeur (PRC) provoque la mise en œuvre des étapes du procédé de communication d'un état de présence, selon l'invention, qui sont mises en œuvre dans le serveur SVR. Par ailleurs, l'application serveur AP-S est aussi chargée de mettre en œuvre des opérations de création d'un espace virtuel de communication persistant pour un groupe d'utilisateurs, lequel espace virtuel fournissant des modes de communication distincts (désignés par "activités"), et de traitement de requêtes d'actions relatives à une activité considérée, en provenance des terminaux des utilisateurs du groupe, de manière séquentielle selon l'ordre d'arrivée des requêtes.

Le module mémoire M1-S stocke en particulier les composants logiciels permettant l'accès, via un portail web, à l'entité serveur d'espaces SS et notamment les interfaces de programmation (API - *Application Programming Interface*) nécessaire à l'interaction à distance avec l'entité serveur d'espaces SS et la base de données d'espaces DB. Le module mémoire M1-S stocke aussi les logiques ou algorithmes d'exécution des modes de communication (désignés par "activités") disponibles pour chaque espace virtuel créé. Enfin, le module mémoire M1-S comporte un sous-module d'authentification d'utilisateurs chargé de vérifier des données d'identification d'un utilisateur d'un groupe d'utilisateurs, lors d'une tentative de connexion à un espace virtuel.

Toujours à la figure 1, la constitution interne d'un terminal d'utilisateur selon l'invention est illustrée sous le numéro de référence 20. Les terminaux d'utilisateur T1, T2 sont constitués d'éléments agencés selon une architecture matérielle d'ordinateur (20). Cette architecture comprend notamment un processeur (PRC_T) et des composants mémoire de type ROM et RAM communiquant par l'intermédiaire d'un ensemble d'un ou plusieurs bus de données (Bt).

D'un point de vue fonctionnel le terminal T1, ici un terminal mobile, inclut notamment les modules fonctionnels détaillés ci-après :
- un module I/O d'interface de communication réseau, chargé d'établir des sessions de communication selon un protocole de communication tel qu'un protocole de type HTTP (*HyperText Transfer Protocol*) ou HTTPS (*HyperText Transfer Protocol Secure*), ou encore SIP (*Session Initiation Protocol*), sur le réseau NW pour communiquer avec le serveur SVR, mais également de permettre l'établissement de sessions de communication de téléphonie mobile avec les autres terminaux du groupe (ici le terminal T2).
- Un module système d'exploitation, OS-T, par exemple le système d'exploitation Android™ de la société Google, gérant l'interaction entre les différents modules et le processeur (PRC-T) du terminal T1.
- Un module d'affichage SCR/KB associé à un clavier (tactile ou mécanique) et un écran d'affichage couplé avec un module d'interface graphique GUI (*Graphical User Interface*) pour présenter graphiquement à l'utilisateur du terminal des données relatives à un espace virtuel et aux contenus multimédias associés.
- Un module mémoire M1-T dans lequel sont enregistrées des instructions de programme de l'application cliente AP-T selon l'invention, dont l'exécution par le processeur (PRC-T) du terminal déclenche la connexion du terminal au serveur de communication SVR via le réseau NW, afin de créer un espace virtuel de communication pour un groupe d'utilisateurs, et la génération de requêtes d'actions relatives à une activité considérée d'un espace déjà créé, puis leur envoi au serveur.

Le module mémoire M1-T contient également un sous-module de gestion de présence des utilisateurs du groupe dans l'espace virtuel. Le sous-module de gestion de présence comprend notamment des instructions adaptées à traiter des messages de notification de présence en provenance du serveur de notification (NO) du serveur SVR. Ces messages de notifications étant porteur d'informations de changement d'état de présence d'un ou plusieurs utilisateurs dans l'espace virtuel.

Le sous-module de gestion de présence est couplé avec le module d'interface graphique GUI du terminal qui est alors chargé en particulier d'afficher à l'écran du terminal, pour chacune des activités, une icône graphique représentant l'activité considérée. A cette fin, conformément à l'invention, le module GUI inclut des éléments logiciels aptes à déterminer pour chacune des activités une mise en forme graphique de l'icône associée. La mise en forme graphique de chaque icône est déterminée en fonction de l'état de présence des utilisateurs relativement à cette activité. Ainsi, le ou les utilisateurs participant à l'activité considérée peuvent être identifiés rapidement de manière visuelle.

La mémoire M1-T d'un terminal (T1, T2) stocke en outre des composants logiciels chargés respectivement de mettre en œuvre les algorithmes (encore désignés par "logiques") d'exécution des activités fournies par l'espace virtuel hébergé dans le serveur, et de mettre à jour ou télécharger ces algorithmes depuis le serveur SVR, en particulier lorsque l'application AP-T du terminal ne dispose pas de ces algorithmes initialement ou que de nouvelles activités et algorithmes d'exécution associés sont disponibles (évolution du service). Le module mémoire M1-T inclut également un module logiciel orchestrateur chargé de la gestion de l'exécution des activités en liaison avec le module d'interface graphique GUI.
- un second module mémoire M2-T, de type mémoire cache, c'est-à-dire une mémoire qui enregistre temporairement des copies de données provenant d'une autre source de donnée, afin de diminuer le temps d'accès (en lecture ou en écriture) d'un processeur à ces données. Cette mémoire M2-T est chargée ici de stocker une copie de réplication de l'état courant de l'espace virtuel considéré (ici, associé au groupe d'utilisateurs des terminaux T1 et T2), c'est-à-dire une copie de réplication des contenus multimédias associés aux activités fournies par l'espace virtuel. Cette copie de réplication est mise à jour à chaque connexion du terminal (T1, T2) au serveur SVR. L'accès aux données enregistrées dans la mémoire M2-T ou directement auprès du serveur SVR via une connexion réseau, est géré par un module logiciel spécifique de l'application AP-T.

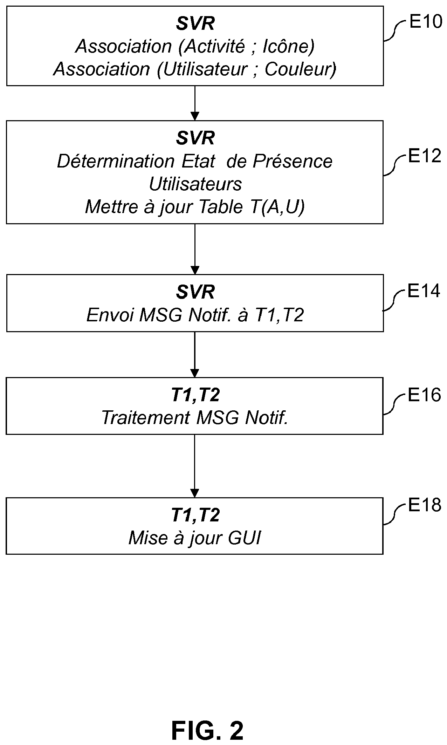

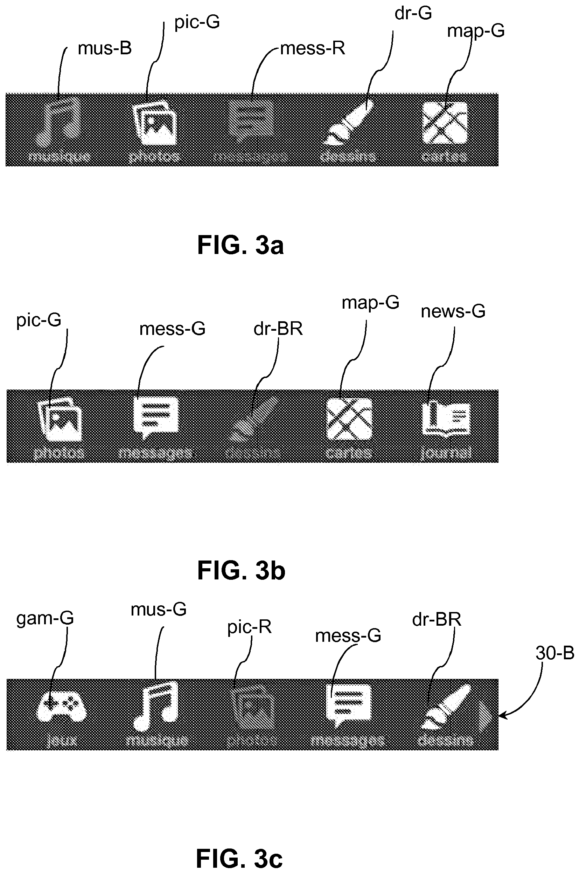

La **figure 2** représente sous forme d'organigramme les principales étapes d'un procédé de communication d'un état de présence d'un groupe d'utilisateurs dans un espace virtuel de communication, conformément à un mode de réalisation de l'invention. Les étapes du procédé illustré à la figure 2 sont décrites ci-après en relation avec les **figures 3a-3c** qui représentent respectivement un exemple de bandeau d'affichage d'icônes graphiques destiné à être affiché dans un terminal selon l'invention, lequel bandeau change d'aspect en fonction de changements de présence d'un groupe de deux utilisateurs dans un espace virtuel de communication selon l'invention.

L'étape E10, mise en œuvre dans le serveur lors de la configuration de l'espace virtuel associé au groupe d'utilisateurs A et B respectivement munis des terminaux T1 et T2, comprend l'association à chacune des activités offertes par l'espace virtuel d'une icône graphique représentant l'activité. Cette association peut être, selon l'implémentation choisie, prédéfinie par l'application serveur ou bien déterminée par le choix de l'utilisateur à partir d'une bibliothèque d'icônes. Concernant l'association (Activité ; Icône), les exemples des figures 3a-3c illustrent des icônes (mus, pic, mess, dr, map, news, gam) représentant respectivement les activités (musique, photos, messages, dessins, cartes, journal, jeux).

Toujours à l'étape E10, il est procédé à l'affectation à chacun des utilisateurs A, B d'une couleur destinée à les représenter. Concernant l'association (Utilisateur ; Couleur), les exemples des figures 3a-3b correspondent à l'affectation de la couleur bleue (B) à l'un des deux utilisateurs du groupe, par exemple A, et de la couleur rouge (R) à l'autre utilisateur, l'utilisateur B dans cet exemple. Cette affectation peut être effectuée automatiquement par l'application serveur, ou bien choisie par les utilisateurs du groupe.

A l'étape E12, le module de gestion de présence du serveur SS détermine l'état de présence des utilisateurs A et B dans l'espace virtuel. Par exemple, l'utilisateur A est présent dans l'activité 'musique' (mus) et l'utilisateur B présent dans l'activité 'messagerie' (mess). La table de présence notée T(A,U) est alors mise à jour dans le serveur de gestion de présence (SS).

Ci-dessous, on donne deux exemples de format de tables de présence (exemples 1 et 2) pouvant être utilisés.

**Table de Présence - Exemple 1**

| Données Activités (utilisateur A, utilisateur B) : |
|---|
| - Activité 1 (présence A = 0, présence B = 1) |
| - Activité 2 (présence A = 0, présence B = 0) |
| - Activité 3 (présence A = 0, présence B = 0) |

**Table de Présence - Exemple 2**

| Données Activités (utilisateur A, utilisateur B) |
|---|
| - liste des activités partagées (Activité1, Activité2,...) |
| - Présence (A) = absent |
| - Présence (B) = activité 1 |

Une fois la table de présence mise à jour dans le serveur de présence, à l'étape E14, des messages de notifications sont transmis aux terminaux T1, T2 afin de provoquer une mise à jour de l'interface graphique GUI mise en œuvre par l'application cliente (AP-T) exécutée dans chacun des terminaux. Dans le mode de réalisation exposé, les messages de notifications sont transmis aux terminaux en utilisant un protocole de type HTTP ou SIP. Selon une variante de réalisation alternative ou additionnelle, on peut aussi envisager une mode d'échange d'états de présence directement entre les terminaux d'utilisateurs, c'est-à-dire décentralisé par rapport au serveur SVR. On pourra, dans cette variante de réalisation, utiliser un protocole de communication compatible avec un mode de communication de type "pair à pair" (*peer-to-peer* - P2P, en anglais) entre les terminaux, par exemple le protocole http ou le protocole SIP.

A l'étape E16, après réception des messages de notification d'état de présence (MSG Notif.) dans chacun des terminaux T1 et T2 des utilisateurs A et B, l'application cliente (AP-T) de chaque terminal traite les messages de notification reçus, puis coopère avec le module d'interface graphique GUI, à l'étape E18, pour mettre en forme graphiquement les icônes correspondant aux activités offertes par l'espace virtuel, en fonction de l'état de présence des utilisateurs A et B relativement à chacune des activités.

Comme déjà indiqué plus haut, les figures 3a-3c représentent respectivement différents états d'un bandeau d'icônes graphiques destiné à être affiché dans un terminal selon l'invention, ce bandeau changeant d'aspect en fonction des changements de présence concernant le groupe des deux utilisateurs A et B, dans l'espace virtuel donné en exemple plus haut, dans lequel les icônes (mus, pic, mess, dr, map, news, gam) représentent respectivement les activités (musique, photos, messages, dessins, cartes, journal, jeux). Par ailleurs, dans cet exemple, la couleur bleue (B) est affectée à l'utilisateur A, et la couleur rouge (R) à l'utilisateur B.

Sur **la** **figure 3a****,** l'icône 'musique' est bleue (mus-B) et l'icône 'messages' est rouge (mess-R) ce qui indique que l'utilisateur A est présent dans l'activité 'musique' tandis que l'utilisateur B est présent dans l'activité 'messages'. Les icônes des autres activités (pic-G, dr-G, map-G) sont affichées dans une couleur dite 'neutre', par exemple la couleur grise (G), indicative du fait qu'aucun utilisateur n'est présent pour ces activités.

Sur la **figure 3b****,** seule l'icône 'dessin' est colorée (couleur autre que la couleur neutre (grise)). Plus précisément, la partie supérieure du "pinceau" est de couleur rouge, tandis que la partie inférieure du pinceau est de couleur bleue (nuances non visibles sur la figure). Cela est indiqué par le signe de référence dr-BR (icône 'dessins' (dr) bleue (B) et rouge (R)). La mise en forme graphique de l'icône 'dessins' indique donc que les deux utilisateurs A et B partagent l'activité 'dessins'.

Sur la **figure 3c****,** le bandeau graphique affiché sur l'écran du terminal ne peut afficher simultanément toutes les icônes des activités. Dans ce cas un signe en forme de triangle 30 indique que la suite des icônes peut être visualisée à droite, en faisant défiler le bandeau de droite à gauche, par exemple en touchant l'écran (écran tactile). Dans la partie visible du bandeau, seule l'icône 'photos' (pic) est colorée, en couleur rouge (R), ce qui indique que l'utilisateur B est présent dans l'activité 'photos'. Concernant l'utilisateur A, le signe en forme de triangle 30 est affiché en bleu (B), ce qui indique que l'utilisateur A est présent dans une activité dont l'icône n'est pas affichée dans la partie actuellement visible du bandeau, mais qui peut être visualisée en faisant défiler le bandeau de droite à gauche, par exemple l'icône correspondant à l'activité 'cartes' ou celle correspondant à l'activité 'journal'.

## Revendications

1. **Procédé** de communication d'un état de présence d'un groupe d'utilisateurs munis de terminaux d'utilisateurs, dans un espace virtuel de communication fourni par un serveur de communication sur un réseau de communication, ledit espace virtuel fournissant une pluralité de modes de communication distincts, dits "activités", pouvant être partagés par tous les utilisateurs dudit groupe, ledit procédé comportant des opérations consistant à :
- associer (E10) à chaque activité de l'espace virtuel une icône graphique ayant une forme géométrique et représentant ladite activité, et destinée à être affichée au travers d'une interface graphique mise en œuvre par une application cliente de partage d'activités installée dans chaque terminal d'utilisateur ;
- déterminer (E12) un état de présence de chaque utilisateur du groupe dans l'espace virtuel de communication ;
- déterminer (E14-E18) pour chacune des activités une mise en forme graphique de l'icône associée sans modification de la forme géométrique de l'icône, ladite mise en forme graphique étant déterminée en fonction de l'état de présence des utilisateurs relativement à cette activité, et permettant d'identifier visuellement le ou les différents utilisateurs participant à cette activité.

2. Procédé selon la revendication 1, comportant en outre une opération consistant à affecter au préalable à chaque utilisateur du groupe une couleur spécifique représentant l'utilisateur, et dans lequel ladite mise en forme graphique d'une icône associée à une activité donnée est déterminée en fonction de ou des couleurs représentant respectivement le ou les utilisateurs présents pour cette activité.

3. Procédé selon la revendication 2, dans lequel, lorsque pour une activité donnée :
- aucun utilisateur n'est présent, l'icône graphique associée à ladite activité est affichée avec une couleur déterminée dite "neutre" ;
- un utilisateur est présent, l'icône graphique associée à ladite activité est représentée graphiquement avec la couleur identifiant l'utilisateur présent pour cette activité ;
- au moins deux utilisateurs sont présents, l'icône graphique associée à ladite activité est représentée graphiquement avec les différentes couleurs identifiant respectivement lesdits au moins deux utilisateurs.

4. Procédé selon la revendication 2 ou 3, dans lequel l'opération de détermination d'un état de présence de chaque utilisateur du groupe dans l'espace virtuel de communication comprend :
- la détection d'une connexion d'un utilisateur au serveur de communication et de la sélection d'une activité par cet utilisateur ;
- la mise à jour d'une structure de données mettant en correspondance des identifiants d'activité avec des identifiants d'utilisateur, un identifiant d'utilisateur mis en correspondance avec un identifiant d'activité indiquant que l'utilisateur correspondant est actuellement présent dans l'activité correspondante.

5. Procédé selon la revendication 4, dans lequel, en réponse à une mise à jour de ladite structure de données, un message de notification de présence est transmis aux terminaux d'utilisateurs afin de provoquer une mise de à jour correspondante de l'interface graphique mise en œuvre par l'application cliente de chaque terminal.

6. Procédé selon l'une quelconque des revendications 1 à 5, dans lequel chaque activité fournie par ledit espace virtuel porte sur au moins un contenu multimédia associé, dit contenu d'activité, partagé par les utilisateurs du groupe, et étant mise en œuvre par des actions déterminées dont l'exécution peut être déclenchée par tous les utilisateurs du groupe, lesdites actions incluant au moins des actions de création, modification ou suppression d'un contenu d'activité donné ;
et dans lequel des requêtes d'actions relatives à une activité considérée, en provenance des terminaux des utilisateurs du groupe, sont traitées de manière séquentielle selon l'ordre d'arrivée desdites requêtes.

7. Procédé selon la revendication 6, dans lequel une action en cours d'exécution par un utilisateur présent dans une activité donnée, provoque un effet graphique supplémentaire sur l'icône représentant ladite activité, ledit effet graphique indiquant que cet utilisateur, présent dans l'activité, est actuellement actif.

8. **Serveur** de communication adapté pour la mise en œuvre d'un procédé, selon l'une quelconque des revendications 1 à 7, de communication d'un état de présence d'un groupe d'utilisateurs munis de terminaux d'utilisateurs, dans un espace virtuel de communication fourni via un réseau de communication, ledit espace virtuel fournissant une pluralité de modes de communication distincts, dits "activités", pouvant être partagés par tous les utilisateurs dudit groupe, chaque activité offerte par l'espace virtuel étant associé à une icône graphique ayant une forme géométrique, représentant ladite activité et étant destinée à être affichée au travers d'une interface graphique mise en œuvre par une application cliente de partage d'activités installée dans chaque terminal d'utilisateur,
ledit serveur de communication comportant :
- des moyens pour déterminer un état de présence de chaque utilisateur du groupe dans l'espace virtuel de communication ;
- des moyens d'envoi de messages de notification de présence à destination des terminaux d'utilisateurs, afin de provoquer dans chacun des terminaux destinataires une mise à jour de l'interface graphique, telle que décrite par l'une quelconque des revendications 1 à 7, mise en en œuvre par l'application cliente de chaque terminal, suite à un changement de l'état de présence du groupe d'utilisateurs dans l'espace virtuel.

9. Serveur selon la revendication 8, dans lequel lesdits moyens de détection d'un état de présence incluent :
- des moyens de détection d'une connexion d'un utilisateur audit espace virtuel de communication et de la sélection d'une activité par un utilisateur ;
- des moyens de mise à jour d'une structure de données mettant en correspondance des identifiants d'activité avec des identifiants d'utilisateur, un identifiant d'utilisateur mis en correspondance avec un identifiant d'activité indiquant que l'utilisateur correspondant est présent dans l'activité correspondante.

10. **Système** de communication comportant :
- un serveur selon la revendication 8 ou 9, et
- un terminal de communication comportant :
∘ des moyens de connexion à un espace virtuel de communication fourni par le serveur de communication, selon la revendication 8 ou 9, sur un réseau de communication, ledit espace virtuel fournissant une pluralité de modes de communication distincts, dits "activités", pouvant être partagés par tous les utilisateurs d'un groupe d'utilisateurs déterminé ;
∘ des moyens de traitement de messages de notification de présence, reçus en provenance du serveur de communication et porteurs d'informations de changement d'état de présence des utilisateurs dans ledit espace virtuel ;
∘ des moyens d'interface graphique couplés avec lesdits moyens de traitement de messages, chargés d'afficher pour chacune desdites activités une icône graphique ayant une forme géométrique et représentant ladite activité, et de déterminer pour chacune des activités une mise en forme graphique de l'icône associée sans modification de la forme géométrique de l'icône, ladite mise en forme graphique étant déterminée en fonction de l'état de présence des utilisateurs relativement à cette activité, et permettant d'identifier visuellement le ou les utilisateurs participant à cette activité.

11. **Système** selon la revendication 10, dans lequel lesdits moyens d'interface graphique déterminent la mise en forme graphique d'une icône associée à une activité donnée en fonction de ou des couleurs représentant respectivement le ou les utilisateurs présents pour cette activité, une couleur spécifique ayant été au préalable affectée à chaque utilisateur afin de le représenter.

12. **Programme** d'ordinateur installé dans un serveur de communication selon la revendication 8 ou 9, ou dans un terminal de communication selon la revendication 10 ou 11, comportant des instructions de programme dont l'exécution par un processeur provoque la mise en œuvre d'un procédé de communication selon l'une quelconque des revendications 1 à 7.

## Patentansprüche

1. Verfahren zur Mitteilung eines Präsenzzustands einer Gruppe von Benutzern, die mit Benutzerendgeräten ausgestattet sind, in einem virtuellen Kommunikationsraum, der von einem Kommunikationsserver durch ein Kommunikationsnetz bereitgestellt wird, wobei der virtuelle Raum mehrere verschiedene Kommunikationsmodi bereitstellt, bezeichnet als "Aktivitäten", die von allen Benutzern der Gruppe geteilt werden können, wobei das Verfahren die folgenden Schritte umfasst:
- Verknüpfen (E10) jeder Aktivität des virtuellen Raums mit einem grafischen Symbol, das eine geometrische Form aufweist und die Aktivität repräsentiert und dazu bestimmt ist, anhand einer grafischen Oberfläche angezeigt zu werden, die durch eine Client-Anwendung zum Teilen von Aktivitäten implementiert wird, die auf jedem Benutzerendgerät installiert ist;
- Bestimmen (E12) eines Präsenzzustands von jedem Benutzer der Gruppe in dem virtuellen Kommunikationsraum;
- Bestimmen (E14-E18), für jede der Aktivitäten, einer grafischen Formatierung des verknüpften Symbols ohne Veränderung der geometrischen Form des Symbols, wobei die grafische Formatierung in Abhängigkeit von dem Präsenzzustand der Benutzer bezüglich dieser Aktivität bestimmt wird und es ermöglicht, den oder die unterschiedlichen an dieser Aktivität teilnehmenden Benutzer visuell zu identifizieren.

2. Verfahren nach Anspruch 1, ferner umfassend einen Schritt, der darin besteht jedem Benutzer der Gruppe zuvor eine spezifische Farbe zuzuweisen, die den Benutzer repräsentiert, und wobei die grafische Formatierung eines Symbols, das mit einer gegebenen Aktivität verknüpft ist, in Abhängigkeit von der oder den Farben bestimmt wird, die jeweils den oder die Benutzer repräsentieren, die für diese Aktivität präsent sind.

3. Verfahren nach Anspruch 2, wobei, wenn für eine gegebene Aktivität:
- kein Benutzer präsent ist, das grafische Symbol, das mit der Aktivität verknüpft ist, mit einer bestimmten als "neutral" bezeichneten Farbe angezeigt wird;
- ein Benutzer präsent ist, das grafische Symbol, das mit der Aktivität verknüpft ist, grafisch mit der Farbe dargestellt wird, die den Benutzer identifiziert, der für diese Aktivität präsent ist;
- mindestens zwei Benutzer präsent sind, das grafische Symbol, das mit der Aktivität verknüpft ist, grafisch mit den unterschiedlichen Farben dargestellt wird, die jeweils die mindestens zwei Benutzer identifizieren.

4. Verfahren nach Anspruch 2 oder 3, wobei der Schritt des Bestimmens eines Präsenzzustands von jedem Benutzer der Gruppe in dem virtuellen Kommunikationsraum Folgendes umfasst:
- die Detektion einer Verbindung eines Benutzers mit dem Kommunikationsserver und der Auswahl einer Aktivität durch diesen Benutzer;
- die Aktualisierung einer Datenstruktur, die Aktivitätskennungen Benutzerkennungen zuordnet, wobei eine Benutzerkennung, die einer Aktivitätskennung zugeordnet ist, angibt, dass der entsprechende Benutzer aktuell in der entsprechenden Aktivität präsent ist.

5. Verfahren nach Anspruch 4, wobei, in Reaktion auf eine Aktualisierung der Datenstruktur, eine Präsenzbenachrichtigung an die Benutzerendgeräte übertragen wird, um eine entsprechende Aktualisierung der grafischen Oberfläche zu veranlassen, die durch die Client-Anwendung jedes Endgeräts implementiert wird.

6. Verfahren nach einem der Ansprüche 1 bis 5, wobei jede von dem virtuellen Raum bereitgestellte Aktivität mindestens einen verknüpften Multimediainhalt betrifft, bezeichnet als Aktivitätsinhalt, der von den Benutzern der Gruppe geteilt wird, und durch bestimmte Aktionen implementiert wird, deren Ausführung von allen Benutzern der Gruppe ausgelöst werden können, wobei die Aktionen mindestens Aktionen der Erstellung, Änderung oder Löschung eines gegebenen Aktivitätsinhalts umfassen;
und wobei Aktionsanfragen bezüglich einer betreffenden Aktivität, von Endgeräten der Benutzer der Gruppe, nacheinander in der Reihenfolge des Eintreffens der Anfragen bearbeitet werden.

7. Verfahren nach Anspruch 6, wobei eine Aktion, die gerade von einem Benutzer ausgeführt wird, der in einer gegebenen Aktivität präsent ist, einen zusätzlichen grafischen Effekt auf dem Symbol der Aktivität hervorruft, wobei der grafische Effekt angibt, dass dieser Benutzer, der in der Aktivität präsent ist, aktuell aktiv ist.

8. Kommunikationsserver, der für die Implementierung eines Verfahrens nach einem der Ansprüche 1 bis 7 zur Mitteilung eines Präsenzzustands einer Gruppe von Benutzern, die mit Benutzerendgeräten ausgestattet sind, in einem virtuellen Kommunikationsraum geeignet ist, der über ein Kommunikationsnetz bereitgestellt wird, wobei der virtuelle Raum eine Vielzahl von verschiedenen Kommunikationsmodi bereitstellt, bezeichnet als "Aktivitäten", die von allen Benutzern der Gruppe geteilt werden können, wobei jede Aktivität, die von dem virtuellen Raum angeboten wird, mit einem grafischen Symbol verknüpft ist, das eine geometrische Form aufweist und die Aktivität repräsentiert und dazu bestimmt ist, anhand einer grafischen Oberfläche angezeigt zu werden, die durch eine Client-Anwendung zum Teilen von Aktivitäten implementiert wird, die auf jedem Benutzerendgerät installiert ist,
wobei der Kommunikationsserver Folgendes umfasst:
- Mittel zum Bestimmen eines Präsenzzustands von jedem Benutzer der Gruppe in dem virtuellen Kommunikationsraum;
- Mittel zum Verschicken von Präsenzbenachrichtigungen an Benutzerendgeräte, um infolge einer Änderung des Präsenzzustands der Benutzergruppe in dem virtuellen Raum in jedem Zielendgerät eine Aktualisierung der grafischen Oberfläche zu veranlassen, wie sie in einem der Ansprüche 1 bis 7 beschrieben wurde, die durch die Client-Anwendung von jedem Endgerät implementiert wird.

9. Server nach Anspruch 8, wobei die Mittel zur Detektion eines Präsenzzustands Folgendes umfassen:
- Mittel zur Detektion einer Verbindung eines Benutzers mit dem virtuellen Kommunikationsraum und der Auswahl einer Aktivität durch einen Benutzer;
- Mittel zur Aktualisierung einer Datenstruktur, die Aktivitätskennungen Benutzerkennungen zuordnet, wobei eine Benutzerkennung, die einer Aktivitätskennung zugeordnet ist, angibt, dass der entsprechende Benutzer in der entsprechenden Aktivität präsent ist.

10. Kommunikationssystem, umfassend:
- einen Server nach Anspruch 8 oder 9, und
- ein Kommunikationsendgerät, umfassend:
o Mittel zur Verbindung mit einem virtuellen Kommunikationsraum, der von dem Kommunikationsserver nach Anspruch 8 oder 9 durch ein Kommunikationsnetz bereitgestellt wird, wobei der virtuelle Raum mehrere verschiedene Kommunikationsmodi bereitstellt, bezeichnet als "Aktivitäten", die von allen Benutzern einer bestimmten Benutzergruppe geteilt werden können;
∘ Mittel zur Bearbeitung von Präsenzbenachrichtigungen, die von dem Kommunikationsserver empfangen werden und Träger von Informationen zur Änderung des Präsenzzustands der Benutzer in dem virtuellen Raum sind;
∘ Mittel der grafischen Oberfläche, die mit den Mitteln zur Bearbeitung von Benachrichtigungen gekoppelt sind, die dafür zuständig sind, für jede der Aktivitäten ein grafisches Symbol anzuzeigen, das eine geometrische Form aufweist und die Aktivität repräsentiert, und für jede der Aktivitäten eine grafische Formatierung des verknüpften Symbols ohne Veränderung der geometrischen Form des Symbols zu bestimmen, wobei die grafische Formatierung in Abhängigkeit von dem Präsenzzustand der Benutzer bezüglich dieser Aktivität bestimmt wird und es ermöglicht, den oder die an dieser Aktivität teilnehmenden Benutzer visuell zu identifizieren.

11. System nach Anspruch 10, wobei die Mittel der grafischen Oberfläche die grafische Formatierung eines Symbols, das mit einer gegebenen Aktivität verknüpft ist, in Abhängigkeit von der oder den Farben bestimmen, die jeweils den oder die Benutzer repräsentieren, die für diese Aktivität präsent sind, wobei zuvor jedem Benutzer eine spezifische Farbe zugewiesen wurde, um ihn zu repräsentieren.

12. Computerprogramm, das auf einem Kommunikationsserver nach Anspruch 8 oder 9 oder auf einem Kommunikationsendgerät nach Anspruch 10 oder 11 installiert ist, umfassend Programmanweisungen, deren Ausführung von einem Prozessor die Implementierung eines Mitteilungsverfahrens nach einem der Ansprüche 1 bis 7 veranlasst.

## Claims

1. Method of communicating a state of presence of a group of users provided with user terminals, in a virtual communication space provided by a communication server on a communication network, said virtual space providing a plurality of distinct communication modes, called "activities", that can be shared by all the users of said group, said method comprising operations consisting in:
- associating (E10) with each activity of the virtual space a graphic icon having a geometric form and representing said activity, and intended to be displayed through a graphical interface implemented an activity-sharing client application installed in each user terminal;
- determining (E12) a state of presence of each user of the group in the virtual communication space;
- determining (E14-E18), for each of the activities, a graphical formatting of the associated icon without modifying the geometric form of the icon, said graphical formatting being determined as a function of the state of presence of the users relating to this activity, and making it possible to visually identify the different user or users participating in this activity.

2. Method according to Claim 1, also comprising an operation consisting in first assigning each user of the group a specific colour representing the user, and in which said graphical formatting of an icon associated with a given activity is determined as a function of the colour or colours respectively representing the user or users present for this activity.

3. Method according to Claim 2, in which when, for a given activity:
- no user is present, the graphic icon associated with said activity is displayed with a determined, so-called "neutral" colour;
- a user is present, the graphic icon associated with said activity is represented graphically with the colour identifying the user present for this activity;
- at least two users are present, the graphic icon associated with said activity is represented graphically with the different colours respectively identifying said at least two users.

4. Method according to Claim 2 or 3, in which the operation of determining a state of presence of each user of the group in the virtual communication space comprises:
- the detection of a connection of a user to the communication server and of the selection of an activity by that user;
- the updating of a data structure mapping activity identifiers with user identifiers, a user identifier mapped with an activity identifier indicating that the corresponding user is currently present in the corresponding activity.

5. Method according to Claim 4, in which, in response to an updating of said data structure, a presence notification message is transmitted to the user terminals in order to provoke a corresponding updating of the graphical interface implemented by the client application of each terminal.

6. Method according to any one of Claims 1 to 5, in which each activity provided by said virtual space relates to at least one associated multimedia content, called activity content, shared by the users of the group, and being implemented by determined actions whose execution can be triggered by all the users of the group, said actions including at least actions of creation, modification or deletion of a given activity content;
and in which requests for actions relating to an activity concerned, originating from the terminals of the users of the group, are processed sequentially in the order of arrival of said requests.

7. Method according to Claim 6, in which an action currently being executed by a user present in a given activity provokes an additional graphic effect on the icon representing said activity, said graphic effect indicating that this user, present in the activity, is currently active.

8. Communication server suitable for implementing a method, according to any one of Claims 1 to 7, of communicating a state of presence of a group of users provided with user terminals, in a virtual communication space provided via a communication network, said virtual space providing a plurality of distinct communication modes, called "activities", that can be shared by all the users of said group, each activity offered by the virtual space being associated with a graphic icon having a geometric form, representing said activity and being intended to be displayed through a graphical interface implemented by an activity-sharing client application installed in each user terminal,
said communication server comprising:
- means for determining a state of presence of each user of the group in the virtual communication space;
- means for sending presence notification messages to the user terminals, in order to provoke, in each of the recipient terminals, an updating of the graphical interface, as described by any one of Claims 1 to 7, implemented by the client application of each terminal, following a change of the state of presence of the group of users in the virtual space.

9. Server according to Claim 8, in which said means for detecting a state of presence include:
- means for detecting a connection of a user to said virtual communication space and the selection of an activity by a user;
- means for updating a data structure mapping activity identifiers with user identifiers, a user identifier mapped with an activity identifier indicating that the corresponding user is present in the corresponding activity.

10. Communication system comprising:
- a server according to Claim 8 or 9, and
- a communication terminal comprising:
∘ means for connecting to a virtual communication space provided by the communication server, according to Claim 8 or 9, on a communication network, said virtual space providing a plurality of distinct communication modes, called "activities", that can be shared by all the users of a determined group of users;
∘ means for processing presence notification messages received from the communication server and carrying information on a change of state of presence of the users in said virtual space;
∘ graphical interface means coupled with said message processing means, responsible for displaying, for each of said activities, a graphic icon having a geometric form and representing said activity, and for determining, for each of the activities, a graphic format of the associated icon without modifying the geometric form of the icon, said graphical formatting being determined as a function of the state of presence of the users relating to this activity, and making it possible to visually identify the user or users participating in this activity.

11. System according to Claim 10, in which said graphical interface means determine the graphical formatting of an icon associated with a given activity as a function of the colour or colours respectively representing the user or users present for this activity, a specific colour having been previously assigned to each user in order to represent said user.

12. Computer program installed in a communication server according to Claim 8 or 9, or in a communication terminal according to Claim 10 or 11, comprising program instructions whose execution by a processor provokes the implementation of a communication method according to any one of Claims 1 to 7.
